# EUROPEAN PATENT SPECIFICATION

(11) **EP 3 206 360 B1**
(45) Date of publication and mention of the grant of the patent: **14.09.2022**
(21) Application number: 16175761.2
(22) Date of filing: 22.06.2016
(51) Int. Cl.: H04L 47/36, H04L 45/00, H04L 43/10

(54) **APPARATUS, SYSTEM, AND METHOD FOR TIMELY DETECTION OF INCREASES IN THE MAXIMUM TRANSMISSION UNIT OF PATHS WITHIN NETWORKS**
VORRICHTUNG, SYSTEM UND VERFAHREN ZUR RECHTZEITIGEN ERKENNUNG VON ANSTIEGEN DER MAXIMALEN ÜBERTRAGUNGSEINHEIT VON PFADEN IN NETZWERKEN
APPAREIL, SYSTÈME ET PROCÉDÉ DE DÉTECTION TEMPORELLE D'AUGMENTATIONS DANS L'UNITÉ DE TRANSMISSION MAXIMUM DE CHEMINS DANS DES RÉSEAUX

(30) Priority: 11.02.2016 US 201615041736
(43) Date of publication of application: 16.08.2017
(73) Proprietor: Juniper Networks, Inc., Sunnyvale, CA 94089 (US)
(72) Inventor: THOMAS, Reji, 560023 Bangalore (IN); RAMESH, Vivek, 686142 Kottayam (IN); NINAN, Samson P., 560035 Bangalore (IN)
(74) Representative: D Young & Co LLP

(56) References cited:
- US-A1- 2005 041 635
- US-A1- 2010 128 606
- US-A1- 2011 103 399
- Anonymous: "Troubleshooting MTU Issues | Network Monitoring | NetBeez", , 12 August 2014 (2014-08-12), XP055306748, Retrieved from the Internet: URL:https://netbeez.net/2014/08/12/trouble shooting-mtu-issues/ [retrieved on 2016-09-29]

## Description

### BACKGROUND

The maximum transmission unit of a path within a network may change over time. In this context, the maximum transmission unit may represent and/or refer to the size of the largest packet capable of being transmitted from a source to a destination via a path within a network. For example, a path may facilitate communication between a source and a destination within a network. In this example, the path may include and/or involve a series of hops. In the event that the source transmits a packet whose size is larger than the maximum transmission unit of a hop included in the path, the hop may drop the packet and send back an error message indicating that the packet is too big (sometimes referred to as a "Packet Too Big" message).

In a traditional approach to detecting increases in the maximum transmission unit of a path, a source may periodically transmit a packet whose size is larger than the previously determined maximum transmission unit of the path. For example, the source may transmit a larger packet every 10 minutes or so in an effort to determine whether the maximum transmission unit of the path has recently increased. In the event that the source does not receive a "Packet Too Big" message in response, the source may determine that the maximum transmission unit of the router has increased. As a result, the source may begin transmitting data over the path using larger packets.

Unfortunately, since this traditional approach involves testing on a periodic basis, the source may be unable to detect increases in the maximum transmission unit at or near the time they take place. For example, the source may fail to detect an increase in the maximum transmission unit of the path for nearly 10 minutes after the occurrence. The instant disclosure, therefore, identifies and addresses drawbacks of known apparatuses, systems, and methods.

US 2011/103399 A1 relates to tunnel path MTU discovery. US 2005/041635 A1 relates to a network apparatus, system and method for discovering path MTU in a data communication network.

### SUMMARY

The invention is defined by the appended independent claims.

Thus, it will be seen that the present disclosure provides an apparatus, a method and a computer-readable medium for timely detection of increases in the maximum transmission unit of paths within networks.

In the following description, if the term "embodiment" relates to features which are outside the scope of the claims, said features should be understood as referring to examples of the present invention.

### BRIEF DESCRIPTION OF THE DRAWINGS

The accompanying drawings illustrate a number of example embodiments and are a part of the specification. Together with the following description, these drawings demonstrate and explain various principles of the instant disclosure.
FIG. 1 is a block diagram of an example apparatus for timely detection of increases in the maximum transmission unit of paths within networks.
FIG. 2 is a block diagram of an example implementation of an apparatus for timely detection of increases in the maximum transmission unit of paths within networks.
FIG. 3 is a block diagram of an additional example implementation of an apparatus for timely detection of increases in the maximum transmission unit of paths within networks.
FIG. 4 is a block diagram of an additional example implementation of an apparatus for timely detection of increases in the maximum transmission unit of paths within networks.
FIG. 5 is an illustration of an example record that identifies each hop included in a path within a network.
FIG. 6 is a flow diagram of an example method for timely detection of increases in the maximum transmission unit of paths within networks.
FIG. 7 is a block diagram of an example computing system capable of implementing and/or being used in connection with one or more of the embodiments described and/or illustrated herein.

Throughout the drawings, identical reference characters and descriptions indicate similar, but not necessarily identical, elements. While the example embodiments described herein are susceptible to various modifications and alternative forms, specific embodiments have been shown by way of example in the drawings and will be described in detail herein. However, the example embodiments described herein are not intended to be limited to the particular forms disclosed.

### DETAILED DESCRIPTION

The present disclosure describes various apparatuses, systems, and methods for timely detection of increases in the maximum transmission unit of paths within networks. As will be explained in greater detail below, embodiments of the instant disclosure may enable network devices to detect increases in the maximum transmission unit of paths in a more timely fashion than traditional approaches. For example, these embodiments may enable network devices to detect increases in the maximum transmission unit of the paths at the point in time that the paths experience topology changes instead of having to wait for the next polling cycle. As a result, these embodiments may enable the network devices to achieve more effective bandwidth utilization.

The term "path," as used herein, generally refers to any type or form of link and/or series of devices that facilitates communication and/or the flow of traffic between a source and a destination within a network. In one example, a path may include and/or represent a series of hops that carry packets from a source computing device to a destination computing device (or vice versa) within a network.

The term "maximum transmission unit," as used herein, generally refers to the largest packet size capable of being transmitted by a computing device and/or over a path without fragmentation. In one example, the maximum transmission unit of a path within an Internet Protocol version 4 (IPv4) network may range between 68 bytes and 64 kilobytes. Similarly, the maximum transmission unit of a path within an Internet Protocol version 6 (IPv6) network may range between 1280 bytes and 64 kilobytes. Alternatively, the maximum transmission unit of a path within an IPv6 network may reach up to 4 gigabytes by way of the jumbogram option.

The maximum transmission unit is often referred to as and/or abbreviated to "MTU", and the maximum transmission unit of a path is often referred to as Path MTU and/or abbreviated to "PMTU". In addition, the process of determining the PMTU of a path within a network is often referred to as PMTU discovery and/or abbreviated to "PMTUD".

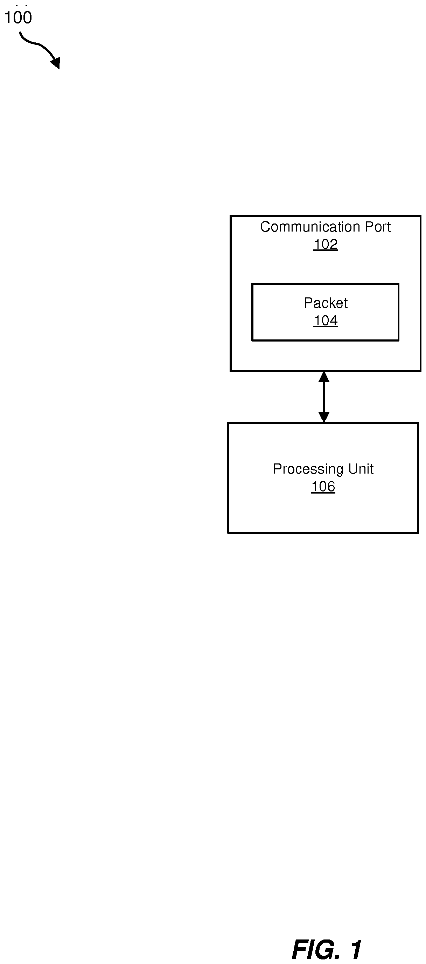

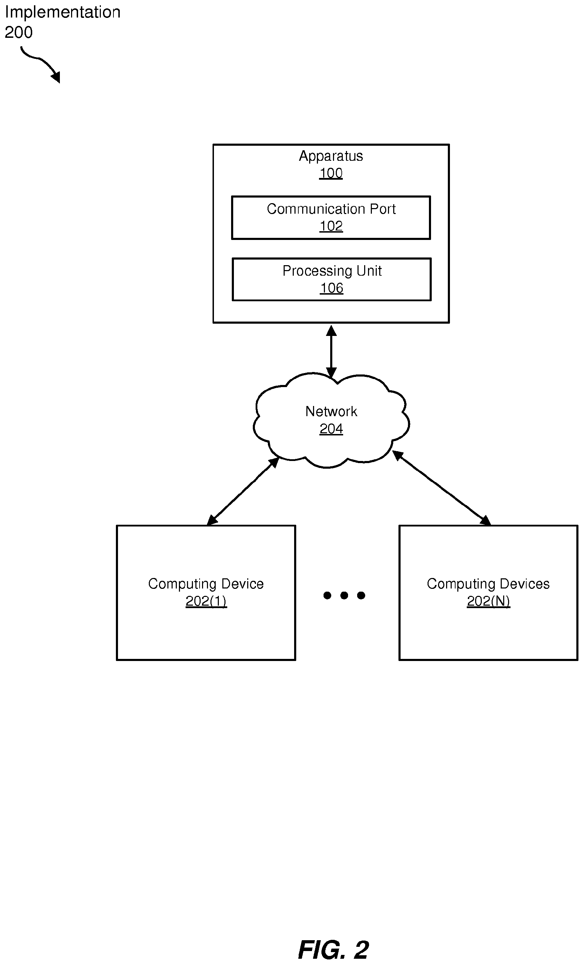

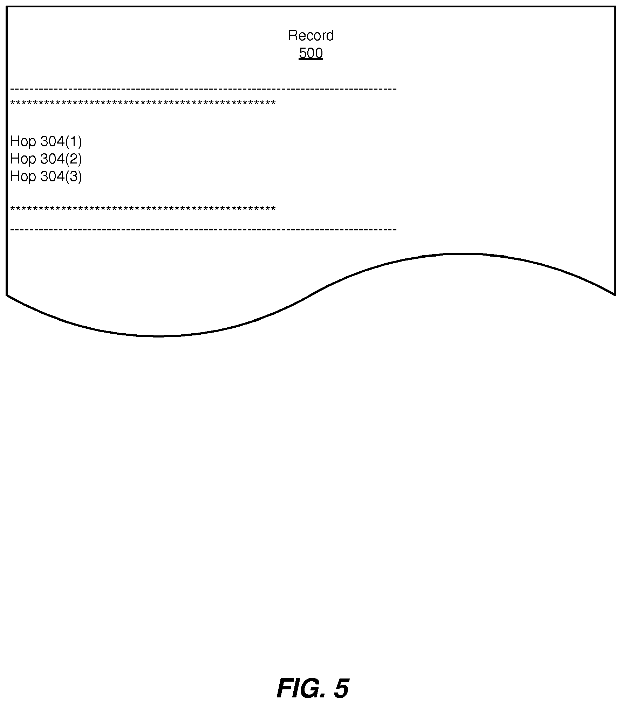

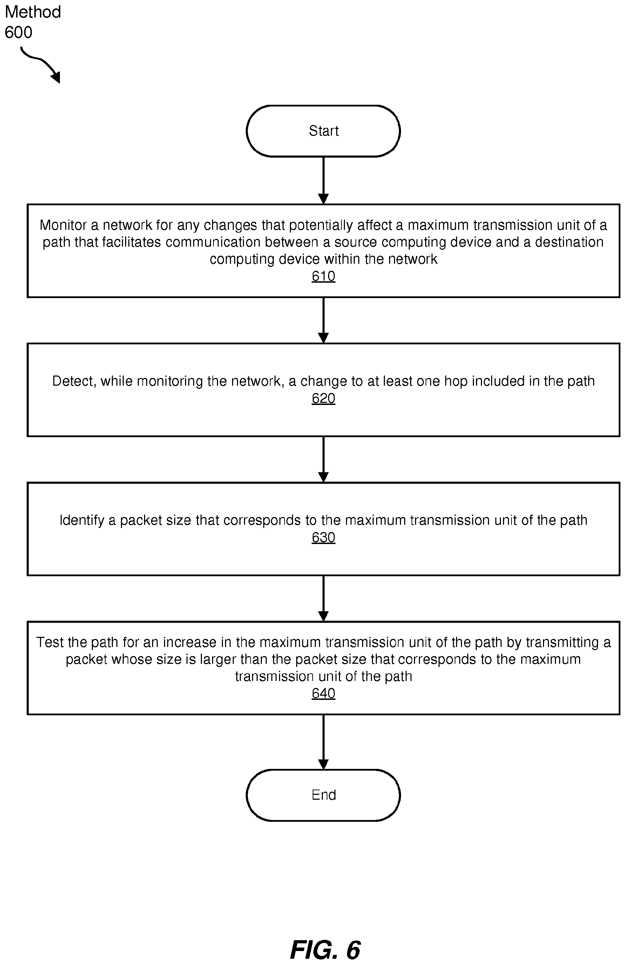

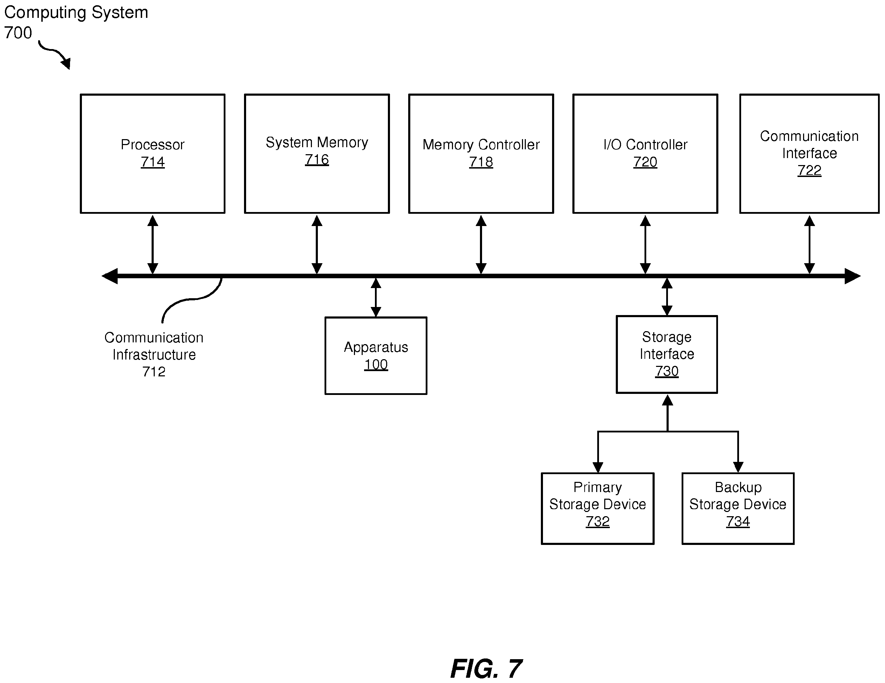

The following will provide, with reference to FIG. 1, an example of an apparatus that facilitate timely detection of increases in the maximum transmission unit of paths within networks. The discussion corresponding to FIGS. 2, 3, and 4 will provide detailed descriptions of example implementations of the apparatus from FIG. 1. The discussions corresponding to FIG. 5 will provide detailed descriptions of an example record that identifies each hop included in a path within a network. The discussion corresponding to FIG. 6 will provide a detailed description of an example method for timely detection of increases in the maximum transmission unit of paths within networks. Finally, the discussion corresponding to FIG. 7 will provide numerous examples of systems that may incorporate the apparatus from FIG. 1.

FIG. 1 shows a block diagram of an exemplary apparatus 100 for timely detection of increases in the maximum transmission unit of paths within networks. Apparatus 100 generally represents any type or form of system, device, and/or mechanism that facilitates timely detection of increases in the maximum transmission unit of paths within networks. Examples of apparatus 100 include, without limitation, computing devices, network devices, routers, switches, hubs, modems, bridges, repeaters, gateways, multiplexers, network adapters, servers, portions of one or more of the same, variations or combinations of one or more of the same, or any other suitable apparatus.

As shown in FIG. 1, apparatus 100 includes a processing unit 106 with access to and/or in communication with a communication port 102. The term "processing unit," as used herein, generally refers to any type or form of physical hardware, circuit, device, and/or processor that performs certain Input/Output (I/O) operations and/or computing tasks. In one example, processing unit 106 may include and/or represent an integrated circuit whose configuration and/or infrastructure is at least partially fixed. Additionally or alternatively, processing unit 106 may represent an integrated circuit whose configuration and/or infrastructure is at least partially variable and/or programmable. Examples of processing unit 106 include, without limitation, processors, microprocessors, microcontrollers, Central Processing Units (CPUs), Field-Programmable Gate Arrays (FPGAs), Application-Specific Integrated Circuits (ASICs), software modules installed one or more of the same, portions of one or more of the same, variations or combinations of one or more of the same, or any other suitable processing unit.

The term "communication port," as used herein, generally refers to any type or form of physical interface, device, and/or housing that forms at least a portion of a connection, link, and/or path within a network. In some examples, communication port 102 may connect and/or link a source computing device with a destination computing device by way of a path within a network. Additionally or alternatively, communication port 102 may facilitate communication between a source computing device and a destination computing device via a path within a network. Examples of communication port 102 include, without limitation, Quad Small Form-factor Pluggable (QSFP) ports, Ethernet ports, Fibre Channel ports, optical ports, InfiniBand ports, CXP connectors, Multiple-Fiber Push-On/Pull-Off (MPO) connectors, XAUI ports, XFP transceivers, XFI interfaces, C Form-factor Pluggable (CFP) transceivers, variations or combinations of one or more of the same, or any other suitable communication ports. Although FIG. 1 illustrates a single communication port, apparatus 100 may include various communication ports in addition to communication port 102.

In some examples, apparatus 100 may achieve timely detection of increases in the maximum transmission unit of paths within a network by monitoring the networks for certain events that are likely to affect the maximum transmission unit of those paths. For example, increases in the maximum transmission unit may occur in response to changes in the topology of the network. Accordingly, apparatus 100 may achieve timely detection of increases in the maximum transmission unit of paths within the network by monitoring the network for any changes to the topology.

By monitoring the network in this way, apparatus 100 may be able to detect increases in the maximum transmission unit of paths based at least in part on event-driven triggers, as opposed to simply assuming such increases periodic polling cycles and waiting to determine whether any "Packet Too Big" messages are issued as a result. Examples of changes that are likely to affect the maximum transmission unit of paths include, without limitation, the addition of network devices to paths, the removal of network devices from paths, the replacement of network devices included in paths with other network devices, the reconfiguration of network devices included in paths, variations or combinations of one or more of the same, or any other suitable changes in the topology of a network.

In some examples, processing unit 106 is communicatively coupled to communication port 102. In such examples, processing unit 106 monitors a network that includes apparatus 100 for any changes to a path that communicatively links and/or connects apparatus 100 with a destination computing device via the path. These changes to the path may potentially affect the maximum transmission unit of the path. While monitoring the network in this way, processing unit 106 detects a change to a hop included in the path.

As a specific example, this change may include and/or represent the addition of a hop to the path. In another example, this change may include and/or represent the removal of a hop from the path. In a further example, this change may include and/or represent the replacement of a hop included in the path with another hop. In an additional example, this change may include and/or represent the reconfiguration of a hop included in the path.

The term "hop," as used herein, generally refers to any type or form of computing device capable of forwarding network traffic and/or facilitating the flow of network traffic. Examples of hops include, without limitation, computing devices, network devices, routers, switches, hubs, modems, bridges, repeaters, gateways, multiplexers, network adapters, servers, portions of one or more of the same, variations or combinations of one or more of the same, or any other suitable hop.

In some examples, the detection of this change to the path may represent and/or amount to an event that triggers and/or initiates a test to determine whether the maximum transmission unit of the path has increased. For example, in response to detecting this change to the path, processing unit 106 identifies a packet size that corresponds to the maximum transmission unit of the path. Put another way, processing unit 106 may identify the maximum transmission unit of the path, which is often expressed as the number of bytes capable of being transmitted in a single a packet and/or frame over the path.

In the event that the network implements IPv4, this packet size may range anywhere from 68 bytes to 64 kilobytes. Alternatively, in the event that the network implements IPv6, this packet size may range anywhere from 1280 bytes to 64 kilobytes (or even up to 4 gigabytes with the jumbogram option).

Upon identifying the packet size corresponding to the maximum transmission unit of the path, processing unit 106 may test for an increase in the maximum transmission unit of the path by transmitting a packet 104 whose size is larger than the maximum transmission unit of the path. The term "packet," as used herein, generally refers to any type or form of package, encapsulation, abstraction, and/or object that includes one or more formatted units of data. Examples of packet 120 include, without limitation, IPv4 packets, IPv6 packets, User Data Protocol (UDP) packets, Internet Control Message Protocol (ICMP) packets, MultiProtocol Label Switching (MPLS) packets, Gateway-to-Gateway Protocol (GGP) packets, Transmission Control Protocol (TCP) packets, variations or combinations of one or more of the same, or any other suitable packet.

As a specific example, in the event that the last-determined maximum transmission unit of the path is 1400 bytes, processing unit 106 may transmit a packet whose size is 1500 bytes over the path. In one example, processing unit 106 may determine that the maximum transmission unit of the path has increased by verifying that no "Packet Too Big" message is issued by any of the hops included in the path in response to the larger packet. Additionally or alternatively, processing unit 106 may determine that the maximum transmission unit of the path has increased by verifying that the larger packet reaches its destination without undergoing fragmentation along the path or being dropped altogether.

FIG. 2 shows a block diagram of an example implementation 200 of apparatus 100 for timely detection of increases in the maximum transmission unit of paths within networks. As illustrated in FIG. 2, implementation 200 may include apparatus 100 in communication with computing devices 202(1)-(N) via a network 204. The term "network," as used herein, generally refers to any type or form of medium and/or architecture that facilitates communication or data transfer. In one example, network 204 may represent an IPv4 or IPv6 network that includes a plurality of computing devices.

Examples of network 204 include, without limitation, an IPv4 network, an IPv6 network, an MPLS network, an intranet, a Wide Area Network (WAN), a Local Area Network (LAN), a Personal Area Network (PAN), the Internet, Power Line Communications (PLC), a cellular network (e.g., a Global System for Mobile Communications (GSM) network), portions of one or more of the same, variations or combinations of one or more of the same, or any other suitable network. Network 204 may facilitate communication or data transfer using wireless or wired connections. Although apparatus 100 and computing devices 202(1)-(N) are illustrated as being external to network 204 in FIG. 2, apparatus 100 and/or computing devices 202(1)-(N) may alternatively represent portions of network 204 and/or be included in network 204.

The term "computing device," as used herein, generally refers to any type or form of device capable of reading computer-executable instructions. In some examples, computing devices 202(1)-(N) may include and/or represent network devices that send and/or receive data packets. Examples of computing devices 202(1)-(N) include, without limitation, network devices, routers, switches, modems, gateways, hubs, repeaters, servers, laptops, desktops, mobile devices, internetenabled televisions, and/or BLU-RAY players, portions of one or more of the same, variations or combinations of one or more of the same, or any other suitable types of computing devices.

In some examples, computing devices 202(1)-(N) may facilitate network traffic between other computing devices. For example, computing devices 202(1)-(N) may forward certain network traffic to end-point and/or destination devices that are not illustrated in FIG. 2. Alternatively, computing devices 202(1)-(N) may include and/or represent end-point and/or destination computing devices.

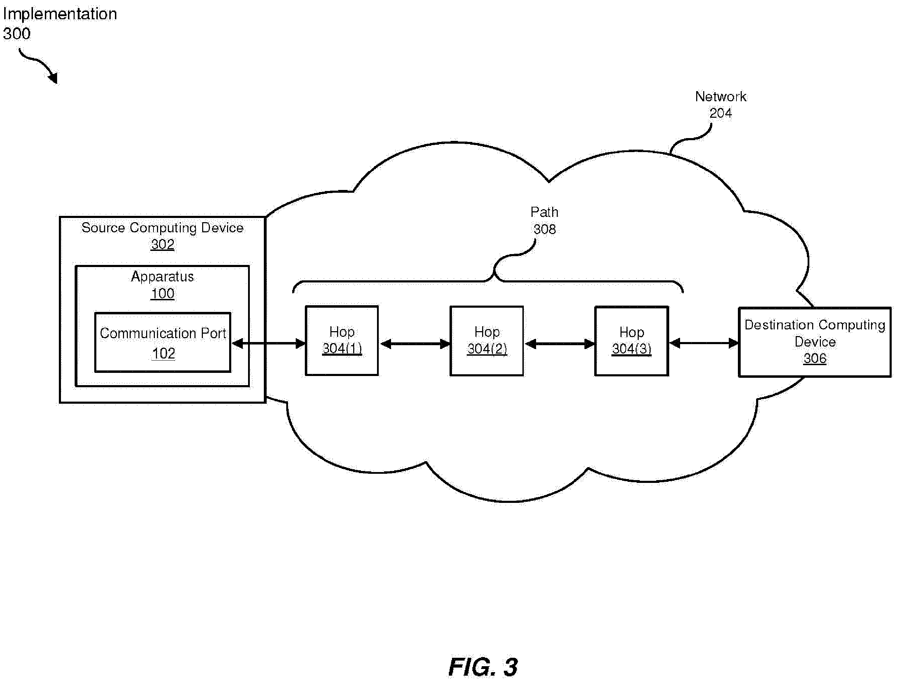

FIG. 3 shows an additional example implementation 300 for timely detection of increases in the maximum transmission unit of paths within networks. As illustrated in FIG. 3, implementation 300 may include a source computing device 302 in communication with a destination computing device 306 via a path 308 within network 204. In this example, source computing device 302 may include and/or represent apparatus 100. In addition, path 308 may include and/or represent hops 304(1), 304(2), and 304(3). Although FIG. 3 illustrates only hops 304(1)-(3) for purposes of simplicity and readability, alternative embodiments may involve paths that include any number of hops (whether more or less).

In some examples, processing unit 106 as part of source computing device 302, monitors network 204 for any changes to path 308 that potentially affect the maximum transmission unit of path 308. In one example, processing unit 106 creates and/or maintain a record that identifies each hop included in path 308 to use as a reference. For example, processing unit 106 transmits a packet that makes a round trip from source computing device 302 to destination computing device 306 and then back to source computing device 302 via path 308. In this example, processing unit 106 initiates transmission of this packet at a specific point in time. As the packet returns to source computing device 302, processing unit 106 identifies hops 304(1)-(3) as the traversed path based at least in part on the returning packet (e.g., the packet's header information). Processing unit 106 then creates a record 500 in FIG. 5 that identifies hops 304(1)-(3) as the path traversed by the packet.

In one example, processing unit 106 may perform this kind of monitoring by using a traceroute tool. For example, processing unit 106 may engage a traceroute tool by issuing a "traceroute" command to an operating system of source computing device 302. In response to this command, the traceroute tool may initiate transmission of the packet that traverses path 308 and returns information that identifies hops 304(1)-(3) as the traversed path. Processing unit 106 may then determine which hops were traversed by the packet based at least in part on the information obtained from the traceroute tool. Examples of this traceroute tool include, without limitation, TRACEROUTE, TRACEROUTE(8), TRACERT, PATHPING, TRACEROUTE6, TRACERT6, variations or combinations of one or more of the same, or any other suitable traceroute tool.

In one example, processing unit 106 detects a change to path 308 by transmitting another packet that makes a round trip from source computing device 302 to destination computing device 306 and then back to source computing device 302. In this example, processing unit 106 may initiate transmission of this other packet at a subsequent point in time by engaging the traceroute tool. As the other packet returns to source computing device 302, processing unit 106 determines that path 308 has changed in one way or another since the specific point in time by comparing the hops traversed by the other packet with record 500.

As a specific example, processing unit 106 may determine that another hop (not necessarily illustrated in FIG. 3) was added to path 308 after the specific point in time. In another example, processing unit 106 may determine that one of hops 304(1)-(3) was removed from path 308 after the specific point in time. In a further example, processing unit 106 may determine that one of hops 304(1)-(3) was replaced by another hop (not necessarily illustrated in FIG. 3) after the specific point in time. In an additional example, processing unit 106 may determine that one of hops 304(1)-(3) was reconfigured, modified, and/or shut down after the specific point in time.

In response to detecting the change to one of hops 304(1)-(3), processing unit 106 tests path 308 for any increase in the maximum transmission unit. For example, processing unit 106 identifies a packet size that corresponds to the maximum transmission unit. As a specific example, the maximum transmission unit of path 308 may be represented as a packet size of 1400 bytes.

Upon identifying this packet size, processing unit 106 may transmit a packet whose size is larger than the packet size corresponding to the maximum transmission unit over path 308. For example, in the event that the maximum transmission unit of path 308 has been identified as 1400 bytes, processing unit 106 may transmit a packet of 1500 bytes over path 308. By transmitting this larger packet in response to detecting the change to one of hops 304(1)-(3), processing unit 106 may determine whether the detected change caused an increase of 100 or more bytes in the maximum transmission unit of the path.

In one example, processing unit 106 may determine that the maximum transmission unit of the path has increased based at least in part on the test. For example, processing unit 106 may wait a certain amount of time after having transmitted the packet for a message indicating that the size of the packet is excessively large (e.g., a "Packet Too Big" message) or a message indicating that the packet was fragmented while traversing the path. In the event that no such message is delivered by any of hops 304(1)-(3) to source computing device 302 within that amount of time, processing unit 106 may determine that the maximum transmission unit of path 308 has increased as a result of the detected change.

In response to the increase in the maximum transmission unit of path 308, processing unit 106 may transmit network traffic from source computing device 302 to destination computing device 306 via the path using packets whose size is consistent with the increased maximum transmission unit. For example, in the event that the maximum transmission unit has increased to 1500 bytes, processing unit 106 may transmit network traffic to destination computing device 306 using packets that each include 1500 bytes.

In one example, processing unit 106 may determine that the maximum transmission unit of the path has not increased based at least in part on the test. For example, processing unit 106 may detect a message (e.g., a "Packet Too Big" message) issued by one of hops 304(1)-(3) in response to receiving the larger packet. This message may indicate that the size of the packet is excessively large and/or indicate that the hop fragmented the packet on its way to the destination.

As a result of no increase in the maximum transmission unit of path 308, processing unit 106 may continue transmitting network traffic from source computing device 302 to destination computing device 306 via the path using packets whose size is consistent with the last-determined maximum transmission unit. For example, in the event that the maximum transmission unit remained at 1400 bytes despite the detected change to the path, processing unit 106 may continue transmitting network traffic to destination computing device 306 using packets that each include 1400 bytes.

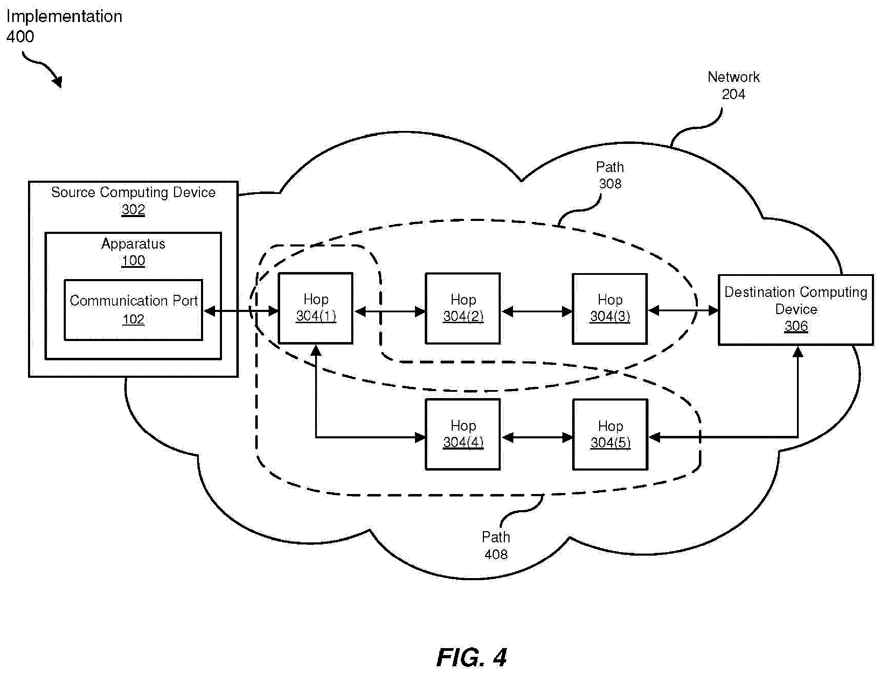

FIG. 4 shows an additional example implementation 400 for timely detection of increases in the maximum transmission unit of paths within networks. As illustrated in FIG. 4, implementation 400 may include source computing device 302 in communication with destination computing device 306 via path 308 and a path 408 within network 204. In this example, source computing device 302 may include and/or represent apparatus 100. In this example, path 408 may include and/or represent hops 304(1), 304(4), and 304(5). Paths 308 and 408 may collectively perform load-balancing on network traffic transmitted from source computing 302 to destination computing device 306. The term "load-balancing," as used herein, generally refers to any type or form of process, procedure, and/or operation that distributes and/or allocates network traffic destined for the same intermediate target and/or final destination across paths that include different network devices.

In one example, processing unit 106 may enable hops 304(1)-(5) to collectively perform load-balancing on network traffic transmitted from source computing device 302 to destination computing device 306. For example, processing unit 106 may direct certain packets along path 308 and other packets along path 408 as they leave source computing device 302. In this example, the packets may include headers that identify their respective paths.

In some examples, processing unit 106 monitors network 204 for any changes that potentially affect the maximum transmission unit of path 308 and/or path 408. While monitoring network 204 in this way, processing unit 106 may detect one or more of hops 304(1)-(5). As a result, processing unit 106 identifies a packet size that corresponds to the maximum transmission unit of the path that experienced the change. Processing unit 106 then tests that path for an increase in its maximum transmission unit by transmitting a packet whose size is larger than the packet size that corresponds to the maximum transmission unit of the path.

As a specific example, processing unit 106 detects a change in topology along path 408 within network 204. In response to detecting this change, processing unit 106 may identify 1600 bytes as the maximum transmission unit of path 408. Processing unit 106 then tests path 408 for an increase in its maximum transmission unit by transmitting a packet of 1630 bytes to destination computing device 306 along path 408.

As explained above in connection with FIGS. 1-5, a source device may perform PMTU discovery only when triggered by a change to the topology of a network, as opposed to performing such discovery on a periodic basis. For example, the source device may monitor route changes using traceroute messages. While monitoring route changes in this way, the source device may detect a route change that triggers a calculation of the PMTU. In other words, the source device may initiate a recalculation of the PMTU in response to detecting a route change via traceroute messages.

The PMTU calculation may take into account any load-balancing performed along the path to a destination device. For example, the source device may adjust the calculation of the PMTU to account for multiple paths traversed by network traffic originating from the source device and arriving at the destination device. The source device may adjust the calculation of the PMTU by identifying any differences in the set of hops included in the multiple paths from before and after the detected route change.

Continuing with this example, since a change in the topology may result in increased PMTU, decreased PMTU, and/or the same PMTU, the source device may need to test whether or not the PMTU actually increased as a result of the change. For example, the source device may identify the last-determined PMTU for the path that experienced the detected change. The source device may then transmit a packet whose size is larger than the last-determined PMTU over that path to determine whether its PMTU increased as a result of the detected change to the topology.

If any of the hops along the path generate a "Packet Too Big" message in response to the larger packet, the source device may determine that the PMTU did not increase as a result of the detected change to the topology. Moreover, if any of the hops along the path generate a "Packet Too Big" message in response to a packet of the same size as the last-determined PMTU, the source device may determine that the PMTU actually decreased as a result of the detected change to the topology. Additionally or alternatively, the source device may use a delta soak time to help distinguish between an increase and a decrease in the PMTU. If one of the hops along the path generates a "Packet Too Big" message in response to a larger packet but not in response to a packet of the same size as the last-determined PMTU, the source device may determine that the PMTU remained the same despite the detected change to the topology.

FIG. 6 is a flow diagram of an example method 600 for timely detection of increases in the maximum transmission unit of paths within networks. Method 600 may include the step of monitoring a network for any changes that potentially affect the maximum transmission unit of the path by transmitting a packet whose size is larger than the packet size that corresponds to the maximum transmission unit of the path (610). This monitoring step may be performed in a variety of ways. For example, processing unit 106 as part of a network device, creates a record that identifies each hop included in the path by checking one or more traceroute messages. Additionally or alternatively, processing unit 106 may compare subsequent traceroute messages with the record to determine whether the path has experienced any changes to its topology.

Returning to FIG. 6, method 600 also includes the step of detecting, while monitoring the network, a change to at least one hop included in the path (620). This detecting step may be performed in a variety of ways. For example, processing unit 106 as part of the network device, detects a change to a hop included in the path while monitoring the network based at least in part on the traceroute messages. In one example, processing unit 106 may detect this change by determining that a hop has been added to the path, removed from the path, replaced within the path, and/or reconfigured within the path.

Returning to FIG. 6, method 600 additionally includes the step of identifying a packet size that corresponds to the maximum transmission unit of the path (630). This identifying step may be performed in a variety of ways. For example, processing unit 106 as part of the network device, identifies the packet size based at least in part on the number of bytes expressed as the maximum transmission unit of the path. In one example, processing unit 106 may initiate this identification in response to and/or as a result of detecting the change to the hop.

Returning to FIG. 6, method 600 further includes the step of testing the path for an increase in the maximum transmission unit of the path by transmitting a packet whose size is larger than the packet size that corresponds to the maximum transmission unit of the path (640). This testing step may be performed in a variety of ways. For example, processing unit 106 as part of the network device, transmits a packet whose size is larger than the path's maximum transmission unit over the path. In one example, processing unit 106 may initiate this testing in response to and/or as a result of detecting the change to the hop.

Processing unit 106 may wait a certain amount of time after having transmitted the packet for a message indicating that the size of the packet is excessively large (e.g., a "Packet Too Big" message) or a message indicating that the packet was fragmented while traversing the path. In the event that no such message is delivered by any of the hops within that amount of time, processing unit 106 may determine that the maximum transmission unit of the path has increased as a result of the detected change to the hop. However, in the event that such a message is delivered by one of the hops within that amount of time, processing unit 106 may determine that the maximum transmission unit of the path has not increased as a result of the detected change to the hop.

FIG. 7 is a block diagram of an example computing system 700 capable of implementing and/or being used in connection with one or more of the embodiments described and/or illustrated herein. In some embodiments, all or a portion of computing system 700 may perform and/or be a means for performing, either alone or in combination with other elements, one or more of the steps described in connection with FIG. 6. All or a portion of computing system 700 may also perform and/or be a means for performing and/or implementing any other steps, methods, or processes described and/or illustrated herein. In one example, computing system 700 may include apparatus 100 from FIG. 1.

Computing system 700 broadly represents any type or form of electrical load, including a single or multi-processor computing device or system capable of executing computer-readable instructions. Examples of computing system 700 include, without limitation, workstations, laptops, client-side terminals, servers, distributed computing systems, mobile devices, network switches, network routers (e.g., backbone routers, edge routers, core routers, mobile service routers, broadband routers, etc.), network appliances (e.g., network security appliances, network control appliances, network timing appliances, SSL VPN (Secure Sockets Layer Virtual Private Network) appliances, etc.), network controllers, gateways (e.g., service gateways, mobile packet gateways, multi-access gateways, security gateways, etc.), and/or any other type or form of computing system or device.

Computing system 700 may be programmed, configured, and/or otherwise designed to comply with one or more networking protocols. According to certain embodiments, computing system 700 may be designed to work with protocols of one or more layers of the Open Systems Interconnection (OSI) reference model, such as a physical layer protocol, a link layer protocol, a network layer protocol, a transport layer protocol, a session layer protocol, a presentation layer protocol, and/or an application layer protocol. For example, computing system 700 may include a network device configured according to a Universal Serial Bus (USB) protocol, an Institute of Electrical and Electronics Engineers (IEEE) 1394 protocol, an Ethernet protocol, a T1 protocol, a Synchronous Optical Networking (SONET) protocol, a Synchronous Digital Hierarchy (SDH) protocol, an Integrated Services Digital Network (ISDN) protocol, an Asynchronous Transfer Mode (ATM) protocol, a Point-to-Point Protocol (PPP), a Point-to-Point Protocol over Ethernet (PPPoE), a Point-to-Point Protocol over ATM (PPPoA), a Bluetooth protocol, an IEEE 802.XX protocol, a frame relay protocol, a token ring protocol, a spanning tree protocol, and/or any other suitable protocol.

Computing system 700 may include various network and/or computing components. For example, computing system 700 may include at least one processor 714 and a system memory 716. Processor 714 generally represents any type or form of processing unit capable of processing data or interpreting and executing instructions. For example, processor 714 may represent an application-specific integrated circuit (ASIC), a system on a chip (e.g., a network processor), a hardware accelerator, a general purpose processor, and/or any other suitable processing element.

Processor 714 may process data according to one or more of the networking protocols discussed above. For example, processor 714 may execute or implement a portion of a protocol stack, may process packets, may perform memory operations (e.g., queuing packets for later processing), may execute end-user applications, and/or may perform any other processing tasks.

System memory 716 generally represents any type or form of volatile or non-volatile storage device or medium capable of storing data and/or other computer-readable instructions. Examples of system memory 716 include, without limitation, Random Access Memory (RAM), Read Only Memory (ROM), flash memory, or any other suitable memory device. Although not required, in certain embodiments computing system 700 may include both a volatile memory unit (such as, for example, system memory 716) and a non-volatile storage device (such as, for example, primary storage device 732, as described in detail below). System memory 716 may be implemented as shared memory and/or distributed memory in a network device. Furthermore, system memory 716 may store packets and/or other information used in networking operations.

In certain embodiments, example computing system 700 may also include one or more components or elements in addition to processor 714 and system memory 716. For example, as illustrated in FIG. 7, computing system 700 may include a memory controller 718, an Input/Output (I/O) controller 720, and a communication interface 722, each of which may be interconnected via communication infrastructure 712. Communication infrastructure 712 generally represents any type or form of infrastructure capable of facilitating communication between one or more components of a computing device. Examples of communication infrastructure 712 include, without limitation, a communication bus (such as a Serial ATA (SATA), an Industry Standard Architecture (ISA), a Peripheral Component Interconnect (PCI), a PCI Express (PCIe), and/or any other suitable bus), and a network.

Memory controller 718 generally represents any type or form of device capable of handling memory or data or controlling communication between one or more components of computing system 700. For example, in certain embodiments memory controller 718 may control communication between processor 714, system memory 716, and I/O controller 720 via communication infrastructure 712. In some embodiments, memory controller 718 may include a Direct Memory Access (DMA) unit that may transfer data (e.g., packets) to or from a link adapter.

I/O controller 720 generally represents any type or form of device or module capable of coordinating and/or controlling the input and output functions of a computing device. For example, in certain embodiments I/O controller 720 may control or facilitate transfer of data between one or more elements of computing system 700, such as processor 714, system memory 716, communication interface 722, and storage interface 730.

Communication interface 722 broadly represents any type or form of communication device or adapter capable of facilitating communication between example computing system 700 and one or more additional devices. For example, in certain embodiments communication interface 722 may facilitate communication between computing system 700 and a private or public network including additional computing systems. Examples of communication interface 722 include, without limitation, a link adapter, a wired network interface (such as a network interface card), a wireless network interface (such as a wireless network interface card), and any other suitable interface. In at least one embodiment, communication interface 722 may provide a direct connection to a remote server via a direct link to a network, such as the Internet. Communication interface 722 may also indirectly provide such a connection through, for example, a local area network (such as an Ethernet network), a personal area network, a wide area network, a private network (e.g., a virtual private network), a telephone or cable network, a cellular telephone connection, a satellite data connection, or any other suitable connection.

In certain embodiments, communication interface 722 may also represent a host adapter configured to facilitate communication between computing system 700 and one or more additional network or storage devices via an external bus or communications channel. Examples of host adapters include, without limitation, Small Computer System Interface (SCSI) host adapters, Universal Serial Bus (USB) host adapters, IEEE 1394 host adapters, Advanced Technology Attachment (ATA), Parallel ATA (PATA), Serial ATA (SATA), and External SATA (eSATA) host adapters, Fibre Channel interface adapters, Ethernet adapters, or the like. Communication interface 722 may also enable computing system 700 to engage in distributed or remote computing. For example, communication interface 722 may receive instructions from a remote device or send instructions to a remote device for execution.

As illustrated in FIG. 7, example computing system 700 may also include a primary storage device 732 and/or a backup storage device 734 coupled to communication infrastructure 712 via a storage interface 730. Storage devices 732 and 734 generally represent any type or form of storage device or medium capable of storing data and/or other computer-readable instructions. For example, storage devices 732 and 734 may represent a magnetic disk drive (e.g., a so-called hard drive), a solid state drive, a floppy disk drive, a magnetic tape drive, an optical disk drive, a flash drive, or the like. Storage interface 730 generally represents any type or form of interface or device for transferring data between storage devices 732 and 734 and other components of computing system 700.

In certain embodiments, storage devices 732 and 734 may be configured to read from and/or write to a removable storage unit configured to store computer software, data, or other computer-readable information. Examples of suitable removable storage units include, without limitation, a floppy disk, a magnetic tape, an optical disk, a flash memory device, or the like. Storage devices 732 and 734 may also include other similar structures or devices for allowing computer software, data, or other computer-readable instructions to be loaded into computing system 700. For example, storage devices 732 and 734 may be configured to read and write software, data, or other computer-readable information. Storage devices 732 and 734 may be a part of computing system 700 or may be separate devices accessed through other interface systems.

Many other devices or subsystems may be connected to computing system 700. Conversely, all of the components and devices illustrated in FIG. 7 need not be present to practice the embodiments described and/or illustrated herein. The devices and subsystems referenced above may also be interconnected in different ways from those shown in FIG. 7. Computing system 700 may also employ any number of software, firmware, and/or hardware configurations. For example, one or more of the example embodiments disclosed herein may be encoded as a computer program (also referred to as computer software, software applications, computer-readable instructions, or computer control logic) on a computer-readable medium. The term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives and floppy disks), optical-storage media (e.g., Compact Disks (CDs) and Digital Video Disks (DVDs)), electronic-storage media (e.g., solid-state drives and flash media), and other distribution systems.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered as being by way of example in nature since many other architectures can be implemented to achieve the same functionality.

In some examples, all or a portion of apparatus 100 in FIG. 1 may represent portions of a cloud-computing or network-based environment. Cloud-computing and network-based environments may provide various services and applications via the Internet. These cloud-computing and network-based services (e.g., software as a service, platform as a service, infrastructure as a service, etc.) may be accessible through a web browser or other remote interface. Various functions described herein may also provide network switching capabilities, gateway access capabilities, network security functions, content caching and delivery services for a network, network control services, and/or and other networking functionality.

In addition, one or more of the modules described herein may transform data, physical devices, and/or representations of physical devices from one form to another. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

The preceding description has been provided to enable others skilled in the art to best utilize various aspects of the example embodiments disclosed herein. This description is not intended to be exhaustive or to be limited to any precise form disclosed. Many modifications and variations are possible without departing from the scope of the instant disclosure, as defined by the appended set of claims. Reference should be made to the appended claims in determining the scope of the instant disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. An apparatus comprising:
at least one communication port (102) configured to facilitate communication between a source computing device (302) and a destination computing device (306) via a path to the destination computing device within a network; and
a processing unit (106) communicatively coupled to the communication port, wherein the processing unit is configured to:
perform load-balancing on network traffic transmitted from the source computing device to the destination computing device by directing certain packets along a first path and other packets along a second path different from the first path, wherein each of the first path and the second path amount to the path to the destination computing device;
monitor the network for any changes to the path to the destination computing device, taking into account the performed load-balancing, that affect a maximum transmission unit of the path, by:
transmitting, at a specific point in time, a packet that makes a round trip from the source computing device to the destination computing device and then back to the source computing device, and
creating a record that identifies each hop included in the path based at least in part on the packet that makes the round trip;
detect, while monitoring the network, a change to at least one hop included in the path that is likely to affect a maximum transmission unit of the path, by:
transmitting a further packet that makes a further round trip from the source computing device to the destination computing device and then back to the source computing device; and
determining, by comparing at least one hop listed in the further packet with the record, that the path has changed since the specific point in time; and
in response to detecting the change to the hop:
identify a packet size that corresponds to the maximum transmission unit of the path; and
test the path for an increase in the maximum transmission unit of the path by transmitting a test packet whose size is larger than the packet size that corresponds to the maximum transmission unit of the path.

2. The apparatus of claim 1, wherein the processing unit is configured to transmit the additional packet and the further packet by applying a traceroute tool that directs the additional packet to make the round trip and the further packet to make the further round trip.

3. The apparatus of claim 1 or 2, wherein the processing unit is configured to:
determine that the maximum transmission unit of the path has increased based at least in part on the test of the path; and
transmit network traffic from the source computing device to the destination computing device via the path using packets whose size is consistent with the increased maximum transmission unit.

4. The apparatus of claim 3, wherein the processing unit is configured to determine that the maximum transmission unit of the path has increased by:
waiting, after having transmitted the packet, a certain amount of time for a message indicating that the size of the packet is excessively large; and
determining that no message indicating that the size of the packet is excessively large was delivered within the certain amount of time after having transmitted the packet.

5. The apparatus of any preceding claim, wherein the processing unit is configured to:
determine that the maximum transmission unit of the path has not increased based at least in part on the test of the path; and
transmit network traffic from the source computing device to the destination computing device via the path using packets whose size is consistent with the last-determined maximum transmission unit.

6. The apparatus of claim 5, wherein the processing unit is configured to determine that the maximum transmission unit of the path has not increased by detecting, after having transmitted the packet, a message indicating that the size of the packet is excessively large.

7. The apparatus of any preceding claim, wherein the processing unit is configured to detect the change to the hop included in the path by at least one of:
detecting an addition of a network device to the path;
detecting a removal of a network device from the path; and
detecting a replacement of a network device included in the path with another network device.

8. A method comprising:
performing load-balancing on network traffic transmitted from a source computing device to a destination computing device by directing certain packets along a first path and other packets along a second path different from the first path, wherein each of the first path and the second path amount to a path to the destination computing device
monitoring (610) a network for any changes that affect a maximum transmission unit of a path that facilitates communication between the source computing device (302) and the destination computing device (306) within the network, taking into account the performed load-balancing, by:
transmitting, at a specific point in time, a packet that makes a round trip from the source computing device to the destination computing device and then back to the source computing device; and
creating a record that identifies each hop included in the path based at least in part on the packet that makes the round trip;
detecting (620), while monitoring the network, a change to at least one hop included in the path that is likely to affect a maximum transmission unit of the path, by
transmitting a further packet that makes a further round trip from the source computing device to the destination computing device and then back to the source computing device; and
determining, by comparing at least one hop listed in the further packet with the record, that the path has changed since the specific point in time; and
in response to detecting the change to the hop:
identifying (630) a packet size that corresponds to the maximum transmission unit of the path; and
testing (640) the path for an increase in the maximum transmission unit of the path by transmitting a packet whose size is larger than the packet size that corresponds to the maximum transmission unit of the path.

9. The method of claim 8, wherein transmitting the additional packet and the further packet comprises applying a traceroute tool that directs the additional packet to make the round trip and the further packet to make the further round trip.

10. The method of claim 8 or 9, wherein testing the path for the increase in the maximum transmission unit of the path comprises:
determining that the maximum transmission unit of the path has increased based at least in part on the test of the path; and
transmitting network traffic from the source computing device to the destination computing device via the path using packets whose size is consistent with the increased maximum transmission unit.

11. The method of claim 10, wherein determining that the maximum transmission unit of the path has increased comprises:
waiting, after having transmitted the packet, a certain amount of time for a message indicating that the size of the packet is excessively large; and
determining that no message indicating that the size of the packet is excessively large was delivered within the certain amount of time after having transmitted the packet.

12. A computer-readable medium containing computer-readable instructions configured to carry out the method of any one of claims 8-11.

## Patentansprüche

1. Vorrichtung, die Folgendes umfasst:
mindestens einen Kommunikationsanschluss (102), der konfiguriert ist, eine Kommunikation zwischen einer Quellrechenvorrichtung (302) und einer Zielrechenvorrichtung (306) über einen Weg zu der Zielrechenvorrichtung innerhalb eines Netzes zu erleichtern; und
eine Verarbeitungseinheit (106), die an den Kommunikationsanschluss kommunikationstechnisch gekoppelt ist, wobei die Verarbeitungseinheit konfiguriert ist zum:
Ausführen eines Lastausgleichs an dem Netzverkehr, der von der Quellrechenvorrichtung an die Zielrechenvorrichtung gesendet wird, durch Lenken bestimmter Pakete entlang eines ersten Wegs und anderer Pakete entlang eines zweiten Wegs, der von dem ersten Weg verschieden ist, wobei jeder des ersten Wegs und des zweiten Wegs dem Weg zu der Zielrechenvorrichtung gleichkommt;
Überwachen des Netzes auf irgendwelche Änderungen an dem Weg zu der Zielrechenvorrichtung, unter Berücksichtigung des ausgeführten Lastausgleichs der eine maximale Sendeeinheit des Wegs beeinflusst, durch:
Senden zu einem spezifischen Zeitpunkt eines Pakets, das einen Rundlauf von der Quellrechenvorrichtung zu der Zielrechenvorrichtung und dann zurück zu der Quellrechenvorrichtung macht, und
Erzeugen einer Aufzeichnung, die jeden Sprung, der in dem Weg enthalten ist, zumindest teilweise anhand des Pakets, das den Rundlauf macht, identifiziert;
Detektieren während des Überwachens des Netzes einer Änderung an mindestens einem Sprung, der in dem Weg enthalten ist, die wahrscheinlich eine maximale Sendeeinheit des Wegs beeinflusst, durch:
Senden eines weiteren Pakets, das einen weiteren Rundlauf von der Quellrechenvorrichtung zu der Zielrechenvorrichtung und dann zurück zu der Quellrechenvorrichtung macht; und
Bestimmen durch Vergleichen mindestens eines Sprungs, der in dem weiteren Paket gelistet ist, mit der Aufzeichnung, dass sich der Weg seit dem spezifischen Zeitpunkt geändert hat; und
als Reaktion auf das Detektieren der Änderung an dem Sprung:
Identifizieren einer Paketgröße, die der maximalen Sendeeinheit des Wegs entspricht; und
Testen des Wegs auf eine Erhöhung der maximalen Sendeeinheit des Wegs durch Senden eines Testpakets, dessen Größe größer als die Paketgröße ist, die der maximalen Sendeeinheit des Wegs entspricht.

2. Vorrichtung nach Anspruch 1, wobei die Verarbeitungseinheit konfiguriert ist, das zusätzliche Paket und das weitere Paket durch Anwenden eines Routenverfolgungswerkzeugs, das das zusätzliche Paket lenkt, um den Rundlauf zu machen, und das weitere Paket lenkt, um den weiteren Rundlauf zu machen, zu senden.

3. Vorrichtung nach Anspruch 1 oder 2, wobei die Verarbeitungseinheit konfiguriert ist zum:
Bestimmen zumindest teilweise anhand des Tests des Wegs, dass sich die maximale Sendeeinheit des Wegs erhöht hat; und
Senden von Netzverkehr von der Quellrechenvorrichtung an die Zielrechenvorrichtung über den Weg unter Verwendung von Paketen, deren Größe mit der erhöhten maximalen Sendeeinheit vereinbar ist.

4. Vorrichtung nach Anspruch 3, wobei die Verarbeitungseinheit konfiguriert ist, zu bestimmen, dass sich die maximale Sendeeinheit des Wegs erhöht hat durch:
Warten, nachdem das Paket gesendet wurde, einer bestimmten Zeitspanne auf eine Nachricht, die angibt, dass die Größe des Pakets übermäßig groß ist; und
Bestimmen, dass keine Nachricht, die angibt, dass die Größe des Paktes übermäßig groß ist, innerhalb der bestimmten Zeitspanne, nachdem das Paket gesendet wurde, geliefert wurde.

5. Vorrichtung nach einem vorhergehenden Anspruch, wobei die Verarbeitungseinheit konfiguriert ist zum:
Bestimmen zumindest teilweise anhand des Tests des Wegs, dass sich die maximale Sendeeinheit des Wegs nicht erhöht hat; und
Senden des Netzverkehrs von der Quellrechenvorrichtung an die Zielrechenvorrichtung über den Weg unter Verwendung von Paketen, deren Größe mit der zuletzt bestimmten maximalen Sendeeinheit vereinbar ist.

6. Vorrichtung nach Anspruch 5, wobei die Verarbeitungseinheit konfiguriert ist, zu bestimmen, dass sich die maximale Sendeeinheit des Wegs nicht erhöht hat, durch Detektieren, nachdem das Paket gesendet wurde, einer Nachricht, die angibt, dass die Größe des Pakets übermäßig groß ist.

7. Vorrichtung nach einem vorhergehenden Anspruch, wobei die Verarbeitungseinheit konfiguriert ist, die Änderung an dem Sprung, der in dem Weg enthalten ist, zumindest anhand eines des Folgenden zu detektieren:
Detektieren einer Hinzufügung einer Netzvorrichtung zu dem Weg;
Detektieren eines Entfernens einer Netzvorrichtung von dem Weg; und
Detektieren eines Ersetzens einer Netzvorrichtung, die in dem Weg enthalten ist, durch eine andere Netzvorrichtung.

8. Verfahren, das Folgendes umfasst:
Ausführen eines Lastausgleichs an dem Netzverkehr, der von einer Quellrechenvorrichtung an eine Zielrechenvorrichtung gesendet wird, durch Lenken bestimmter Pakete entlang eines ersten Wegs und anderer Pakete entlang eines zweiten Wegs, der von dem ersten Weg verschieden ist, wobei jeder des ersten Wegs und des zweiten Wegs dem Weg zu der Zielrechenvorrichtung gleichkommt;
Überwachen (610) eines Netzes auf irgendwelche Änderungen, die eine maximale Sendeeinheit eines Wegs, der eine Kommunikation zwischen der Quellrechenvorrichtung (302) und der Zielrechenvorrichtung (306) innerhalb des Netzes erleichtert, beeinflussen, unter Berücksichtigung des ausgeführten Lastausgleichs, durch:
Senden zu einem spezifischen Zeitpunkt eines Pakets, das einen Rundlauf von der Quellrechenvorrichtung zu der Zielrechenvorrichtung und dann zurück zu der Quellrechenvorrichtung macht; und
Erzeugen einer Aufzeichnung, die jeden Sprung, der in dem Weg enthalten ist, zumindest teilweise anhand des Pakets, das den Rundlauf macht, identifiziert;
Detektieren (620) während des Überwachens des Netzes einer Änderung an mindestens einem Sprung, der in dem Weg enthalten ist, die wahrscheinlich eine maximale Sendeeinheit des Wegs beeinflusst, durch:
Senden eines weiteren Pakets, das einen weiteren Rundlauf von der Quellrechenvorrichtung zu der Zielrechenvorrichtung und dann zurück zu der Quellrechenvorrichtung macht; und
Bestimmen durch Vergleichen mindestens eines Sprungs, der in dem weiteren Paket gelistet ist, mit der Aufzeichnung, dass sich der Weg seit dem spezifischen Zeitpunkt geändert hat; und
als Reaktion auf das Detektieren der Änderung an dem Sprung:
Identifizieren (630) einer Paketgröße, die der maximalen Sendeeinheit des Wegs entspricht; und
Testen (640) des Wegs auf eine Erhöhung der maximalen Sendeeinheit des Wegs durch Senden eines Pakets, dessen Größe größer als die Paketgröße ist, die der maximalen Sendeeinheit des Wegs entspricht.

9. Verfahren nach Anspruch 8, wobei das Senden des zusätzlichen Pakets und des weiteren Pakets umfasst, ein Routenverfolgungswerkzeug anzuwenden, das das zusätzliche Paket lenkt, um den Rundlauf zu machen, und das weitere Paket lenkt, um den weiteren Rundlauf zu machen.

10. Verfahren nach Anspruch 8 oder 9, wobei das Testen des Wegs auf die Erhöhung der maximalen Sendeeinheit des Wegs Folgendes umfasst:
Bestimmen zumindest teilweise anhand des Tests des Wegs, dass sich die maximale Sendeeinheit des Wegs erhöht hat; und
Senden von Netzverkehr von der Quellrechenvorrichtung an die Zielrechenvorrichtung über den Weg unter Verwendung von Paketen, deren Größe mit der erhöhten maximalen Sendeeinheit vereinbar ist.

11. Verfahren nach Anspruch 10, wobei das Bestimmen, dass sich die maximale Sendeeinheit des Wegs erhöht hat, Folgendes umfasst:
Warten, nachdem das Paket gesendet wurde, einer bestimmten Zeitspanne auf eine Nachricht, die angibt, dass die Größe des Pakets übermäßig groß ist; und
Bestimmen, dass keine Nachricht, die angibt, dass die Größe des Paktes übermäßig groß ist, innerhalb der bestimmten Zeitspanne, nachdem das Paket gesendet wurde, geliefert wurde.

12. Computerlesbares Medium, das computerlesbare Anweisungen enthält, die konfiguriert sind, das Verfahren nach einem der Ansprüche 8-11 auszuführen.

## Revendications

1. Appareil comprenant :
au moins un port de communication (102) configuré pour faciliter la communication entre un dispositif informatique source (302) et un dispositif informatique de destination (306) par l'intermédiaire d'un chemin vers le dispositif informatique de destination dans un réseau ; et
une unité de traitement (106) couplée de manière communicative au port de communication, où l'unité de traitement est configurée pour :
effectuer un équilibrage de charge sur le trafic de réseau transmis du dispositif informatique source au dispositif informatique de destination en dirigeant certains paquets le long d'un premier chemin et d'autres paquets le long d'un second chemin différent du premier chemin, où chacun du premier chemin et du second chemin équivaut au chemin vers le dispositif informatique de destination ;
surveiller le réseau à la recherche d'une modification quelconque du chemin vers le dispositif informatique de destination, en tenant compte de l'équilibrage de charge effectué, qui affecte une unité de transmission maximale du chemin :
en transmettant, à un moment spécifique, un paquet qui fait un aller-retour, à savoir un aller entre le dispositif informatique source et le dispositif informatique de destination, puis un retour vers le dispositif informatique source, et
en créant un enregistrement qui identifie chaque saut inclus dans le chemin sur la base, au moins en partie, du paquet qui fait l'aller-retour ;
détecter, tout en surveillant le réseau, une modification d'au moins un saut inclus dans le chemin qui est susceptible d'affecter une unité de transmission maximale du chemin :
en transmettant un autre paquet qui effectue un autre aller-retour, à savoir un aller du dispositif informatique source au dispositif informatique de destination, puis un retour vers le dispositif informatique source ; et
en déterminant, en comparant au moins un saut répertorié dans le paquet supplémentaire avec l'enregistrement, que le chemin a changé depuis le moment spécifique ; et
en réponse à la détection de la modification du saut :
identifier une taille de paquet qui correspond à l'unité de transmission maximale du chemin ; et
tester le chemin pour une augmentation de l'unité de transmission maximale du chemin en transmettant un paquet de test dont la taille est plus grande que la taille de paquet qui correspond à l'unité de transmission maximale du chemin.

2. Appareil selon la revendication 1, dans lequel l'unité de traitement est configurée pour transmettre le paquet additionnel et l'autre paquet en appliquant un outil de type Trace Route qui dirige le paquet additionnel pour faire l'aller-retour et l'autre paquet pour faire l'autre aller-retour.

3. Appareil selon la revendication 1 ou la revendication 2, dans lequel l'unité de traitement est configurée pour :
déterminer que l'unité de transmission maximale du chemin a augmenté en se basant, au moins en partie, sur le test du chemin ; et
transmettre le trafic réseau du dispositif informatique source au dispositif informatique de destination par l'intermédiaire du chemin en utilisant des paquets dont la taille est cohérente avec l'unité de transmission maximale augmentée.

4. Appareil selon la revendication 3, dans lequel l'unité de traitement est configurée pour déterminer que l'unité de transmission maximale du chemin a augmenté :
en attendant, après avoir transmis le paquet, une certaine quantité de temps pour un message indiquant que la taille du paquet est excessivement grande ; et
en déterminant qu'aucun message indiquant que la taille du paquet est excessivement grande n'a été délivré dans le certain laps de temps après avoir transmis le paquet.

5. Appareil selon l'une quelconque des revendications précédentes, dans lequel l'unité de traitement est configurée pour :
déterminer que l'unité de transmission maximale du chemin n'a pas augmenté en se basant, au moins en partie, sur le test du chemin ; et
transmettre le trafic réseau du dispositif informatique source au dispositif informatique de destination par l'intermédiaire du chemin en utilisant des paquets dont la taille est cohérente avec la dernière unité de transmission maximale déterminée.

6. Appareil selon la revendication 5, dans lequel l'unité de traitement est configurée pour déterminer que l'unité de transmission maximale du chemin n'a pas augmenté en détectant, après avoir transmis le paquet, un message indiquant que la taille du paquet est excessivement grande.

7. Appareil selon l'une quelconque des revendications précédentes, dans lequel l'unité de traitement est configurée pour détecter la modification du saut inclus dans le chemin par au moins l'une des détections suivantes :
la détection d'un ajout d'un dispositif de réseau au chemin ;
la détection d'un retrait d'un dispositif de réseau du chemin ; et
la détection d'un remplacement d'un dispositif de réseau inclus dans le chemin par un autre dispositif de réseau.

8. Procédé comprenant les étapes suivantes :
effectuer un équilibrage de charge sur le trafic réseau transmis d'un dispositif informatique source à un dispositif informatique de destination en dirigeant certains paquets le long d'un premier chemin et d'autres paquets le long d'un second chemin différent du premier chemin, où chacun du premier chemin et du second chemin équivaut à un chemin vers le dispositif informatique de destination
surveiller (610) un réseau à la recherche d'une modification quelconque qui affecte une unité de transmission maximale d'un chemin qui facilite la communication entre le dispositif informatique source (302) et le dispositif informatique de destination (306) à l'intérieur du réseau, en prenant en compte l'équilibrage de charge effectué :
en transmettant, à un moment spécifique, un paquet qui fait un aller-retour, à savoir un aller entre le dispositif informatique source et le dispositif informatique de destination, puis un retour vers le dispositif informatique source ; et
en créant un enregistrement qui identifie chaque saut inclus dans le chemin sur la base, au moins en partie, du paquet qui fait l'aller-retour ;
détecter (620), tout en surveillant le réseau, une modification d'au moins un saut inclus dans le chemin qui est susceptible d'affecter une unité de transmission maximale du chemin,
en transmettant un autre paquet qui effectue un autre aller-retour, à savoir un aller du dispositif informatique source au dispositif informatique de destination, puis un retour vers le dispositif informatique source ; et
en déterminant, en comparant au moins un saut répertorié dans le paquet supplémentaire avec l'enregistrement, que le chemin a changé depuis le moment spécifique ; et
en réponse à la détection de la modification du saut :
identifier (630) une taille de paquet qui correspond à l'unité de transmission maximale du chemin ; et
tester (640) le chemin pour une augmentation de l'unité de transmission maximale du chemin en transmettant un paquet de test dont la taille est plus grande que la taille de paquet qui correspond à l'unité de transmission maximale du chemin.

9. Procédé selon la revendication 8, dans lequel la transmission du paquet additionnel et de l'autre paquet comprend l'application d'un outil de type Trace Route qui dirige le paquet additionnel pour faire l'aller-retour et l'autre paquet pour faire l'autre aller-retour.

10. Procédé selon la revendication 8 ou la revendication 9, dans lequel le test du chemin pour l'augmentation de l'unité de transmission maximale du chemin comprend les étapes suivantes :
déterminer que l'unité de transmission maximale du chemin a augmenté en se basant, au moins en partie, sur le test du chemin ; et
transmettre le trafic réseau du dispositif informatique source au dispositif informatique de destination par l'intermédiaire du chemin en utilisant des paquets dont la taille est cohérente avec l'unité de transmission maximale augmentée.

11. Procédé selon la revendication 10, dans lequel la détermination que l'unité de transmission maximale du chemin a augmenté comprend :
d'attendre, après avoir transmis le paquet, une certaine quantité de temps pour un message indiquant que la taille du paquet est excessivement grande ; et
de déterminer qu'aucun message indiquant que la taille du paquet est excessivement grande n'a été délivré dans le certain laps de temps après avoir transmis le paquet.

12. Support lisible par ordinateur contenant des instructions lisibles par ordinateur configurées pour mettre en œuvre le procédé de l'une quelconque des revendications 8 à 11.
